# EUROPEAN PATENT APPLICATION

(11) **EP 2 853 516 A1**
(43) Date of publication of application: **01.04.2015**
(21) Application number: 14192198.1
(22) Date of filing: 13.08.2010
(51) Int. Cl.: C02F 9/00, B01D 39/00, C02F 1/28, B01D 15/00, B01J 20/00, C02F 1/42, B01D 24/02, C01B 31/08

(54) **Water filtration system with activated carbon and zeolite**

(30) Priority: 13.08.2009 AU 2009903796
(62) Divisional of application: 10807806.4
(71) Applicant: Water Harvesting Technologies Pty Ltd, Bendigo, VIC 3550 (AU)
(72) Inventor: MCCarthy, David, Thomas, Pakenham, Victoria 3810 (AU); Deletic, Ana, Glen Waverley, Victoria 3150 (AU); Fletcher, Timothy, David, Ballarat, Victoria 3350 (AU)
(74) Representative: Kling, Simone

(57) **Abstract**

In one embodiment the invention relates to a filter media for removal of contaminants from water comprising aluminium coated granular activated carbon and granular zeolite. Another embodiment relates to a method of producing aluminium coated granular activated carbon comprising exposing granular activated carbon to an aqueous solution comprising one or more aluminium salts which is acidified to a pH of between about 5 and about 6.8, removing the aqueous solution and washing and drying the aluminium coated granular activated carbon that is produced.

Further embodiments relate to: a filter system for removal of contaminants from water comprising (i) a middle zone comprising granular activated carbon and granular zeolite and (ii) a lower barrier zone comprising screening material, wherein the system allows a flow rate of water there through of from about 0.5Lsec⁻¹m⁻² to about 10Lsec⁻¹m⁻²; a cartridge containing the filter system and related methods of removing contaminants from water.

## Description

### FIELD OF THE INVENTION

The present invention is directed to a filter media for removal of contaminants from water, to a related filter system, to a filtration cartridge containing the system and to related methods for removal of contaminants from water, and in particular, but not exclusively, from stormwater or runoff water. The invention also relates to methods of producing aluminium coated granular activated carbon (GAC), which is a component of the filter media.

### BACKGROUND OF THE INVENTION

Particularly in arid parts of the world and in view of the influence of climate change there is an increasing awareness of the need to capture and use water efficiently. In Australia in particular, the potable water supply for larger cities primarily comes from rainfall catchment areas situated away from urban areas. While this approach results in high infrastructure costs to pipe water from the catchment area to population centres where it is required, it also ensures that water is potable and substantially uncontaminated by pollutants. Unfortunately, however, a substantial portion of the water obtained from these catchment areas is used in industrial applications such as in the cooling towers of power generators, in agriculture, in building and large scale cleaning, in the watering of parks and gardens and in domestic situations such as clothes washing and flushing of toilets, where potable water is not necessarily required. Alternative supplies of water are therefore required, particularly for non-potable applications, in order to achieve a more sustainable approach to water supply for cities and towns. Significant potential sources of such water are the runoff from domestic and commercial roofs, from public paths and paved areas and particularly from roadways, car parks and the like. While the use of runoff water is advantageous because it can be collected close to areas in which the water is to be used, it is problematic in that runoff water is prone to contamination. For example, stormwater runoff often includes high levels of heavy metals such as from building materials (eg. copper and zinc from roofing materials) and from vehicle related sources (copper, nickel, chromium, zinc and lead from brake linings, zinc from worn tyres and platinum, lead and rhodium that are used as catalysts in automotive fuels). Stormwater runoff can also include significant sources of hydrocarbon contamination predominantly from vehicle fuels, exhaust and lubricants, nutrients such as nitrogen and phosphorus based compounds from soils and degrading organic matter as well as pathogens such as bacteria, algae, yeasts, viral particles, fungi and the like. It is desirable to ensure that runoff water does not include significant levels of contaminants as such contamination is incompatible with the safe storage and use of runoff water, particularly where the water is to be used on parks and gardens or in other contexts where humans or other animals may be exposed to the water. Such contamination is also incompatible with water that is to be released to the environment, particularly sensitive waterway environments.

A further particular challenge with respect to harvesting of storm or runoff water is that its timing and volume is highly variable. In one aspect, therefore, the filter media according to the invention is engineered to cope with very high flow throughs, to maintain good performance after long dry spells (to accommodate for the variability in stormwater discharges) and to target key stormwater pollutants, such as sediment, hydrocarbons, metals, nutrients, and pathogens. Existing treatment systems developed for other water types (i.e. drinking water or wastewater) are unable to meet these demands.

The present invention provides a filter media and a filter system including the media which is able to be adapted to particular water treatment circumstances that may be encountered. For example, the flow rate of water to be treated can be varied as can the nature of contaminants that can be removed such that the quality of the treated water obtained can be selected according to the desired use, whether that be for watering parks and gardens, environmental flows into rivers and creeks, flushing of toilets and washing of clothes or for human or animal consumption.

In developing the filter media and filter system of the present invention the inventors determined that the water treatment efficiency, particularly in terms of removal of nitrogen and phosphorus, of the granular activated carbon component of the media could be improved significantly by coating it with aluminium. US Patent No. 2,210,966 discloses that activated carbon treated in a solution of aluminium salts can be used for removal of fluorides from potable water. Further, Ramos et al, "Adsorption of fluoride from aqueous solution on aluminium-impregnated carbon", Carbon 37 (1999), pp 609-617 outlines that fluorides can be removed from potable water using activated carbon impregnated with aluminium nitrate at a pH of 3 to 4. However, the inventors are not aware of reports of aluminium coated granular activated carbon being effective for removal of phosphorus and nitrogen from water, and nor that this is particularly effective when the aluminium coated granular activated carbon is prepared by acidification to a pH of 5 to 6.8, preferably 6 to 6.5.

### SUMMARY OF THE INVENTION

According to one embodiment of the present invention there is provided a filter media for removal of contaminants from water comprising aluminium coated granular activated carbon and granular zeolite.

According to another embodiment of the present invention there is provided a method of producing aluminium coated granular activated carbon comprising exposing granular activated carbon to an aqueous solution comprising one or more aluminium salts which is acidified to a pH of between about 5 and about 6.8, removing the aqueous solution and washing and drying the aluminium coated granular activated carbon that is produced.

According to a further embodiment of the present invention there is provided a filter system for removal of contaminants from water comprising:
(i) a middle zone comprising granular activated carbon and granular zeolite; and
(ii) a lower barrier zone comprising screening material;
said system allowing a flow rate of water there through of from about 0.5Lsec⁻¹m⁻² to about 10Lsec⁻¹m⁻².

According to another preferred embodiment there is provided a cartridge containing a filter system for removal of contaminants from water wherein the cartridge has a top and base that allows water flow there through and wherein the filter system comprises:
(i) a middle zone comprising granular activated carbon and granular zeolite; and
(ii) a lower barrier zone comprising screening material;
wherein said system allows a flow rate of water there through of from about 0.5Lsec⁻¹m⁻² to about 10Lsec⁻¹m⁻².

According to a further embodiment of the present invention there is provided a method of removing contaminants from water comprising allowing the water to flow through a filter system which comprises:
(i) a middle zone comprising granular activated carbon and granular zeolite; and
(iii) a lower barrier zone comprising screening material;
wherein said water flows through said media at a rate of from about 0.5Lsec⁻¹m⁻² to about 10Lsec⁻¹m⁻².

Preferably the ratio (by volume) of granular activated carbon to granular zeolite in the middle zone is between about 0.5:1 and 2:1. Preferably the middle zone further comprises sand. If present, the sand preferably comprises between about 30% and about 60% of total volume of the middle zone.

In a preferred embodiment the granular activated carbon comprises aluminium coated granular activated carbon.

In another preferred embodiment the filter system further comprises an upper sediment trap for removing particulate contaminants.

In one aspect the top of the cartridge comprises a mesh which serves as a coarse filter of solids, sludge and/or particulates.

### BRIEF DESCRIPTION OF THE FIGURE

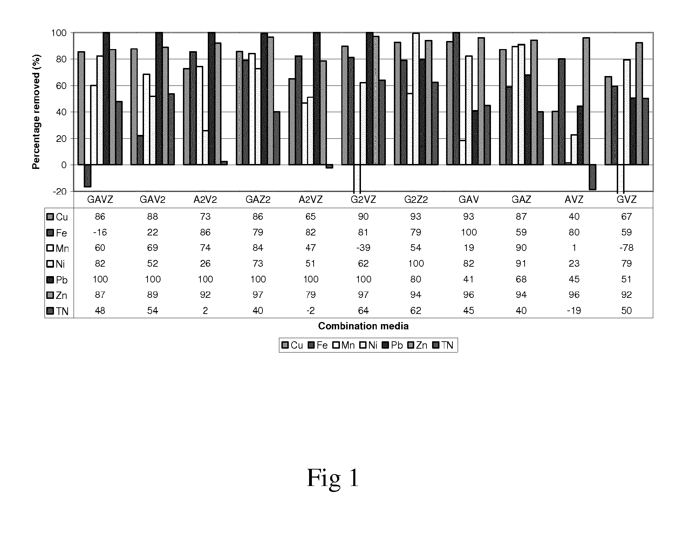

Fig 1 shows a bar graph of the percentage of heavy metal and total nitrogen (TN) contaminants removed for filter media prepared using different combinations of the ingredients: granular activated carbon (G), anthracite (A), vermiculite (V) and zeolite (Z), showing the best overall results for a 1:1.5 ratio (by volume) preparation of G and Z. The heavy metals listed in the key to the figure are depicted in the same order from left to light of the bar graph for each of the media tested (which is important the when colour coding is not evident).

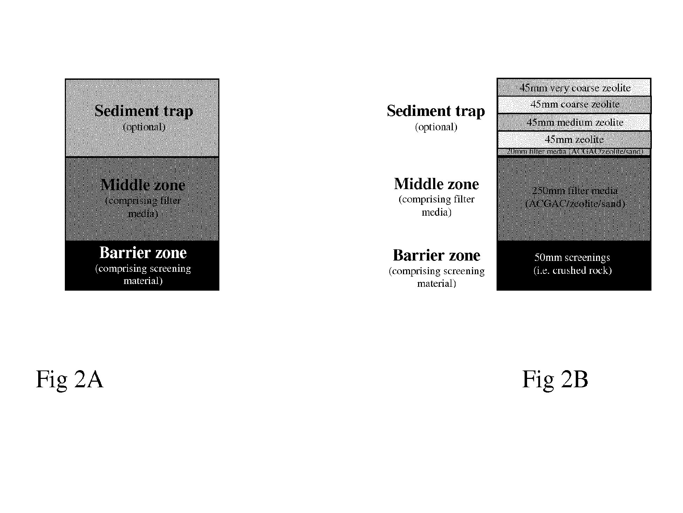

Fig. 2A shows a schematic diagram of a general filter system according to the invention and Fig. 2B shows a schematic diagram of a low flow filter system as referred to in example 2. Both Figs 2A and B show an optional sediment trap.

### DETAILED DESCRIPTION OF THE INVENTION

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

In a broad aspect the present invention relates to a filter media for removal of contaminants such as heavy metals, hydrocarbons, nutrients and pathogens from water, and particularly from runoff or stormwater. The filter media comprises granular activated carbon (GAC), preferably aluminium coated granular activated carbon (ACGAC), and granular zeolite and may also comprise sand. In a low flow rate form of the filter media, which for example is adapted for water flows there through of 0.5 - 3.5 Lsec⁻¹m⁻², the media may comprise GAC and/or ACGAC and granular zeolite, and may additionally comprise sand. In a high flow rate form of the filter media, which for example is adapted for water flows there through of 4 - 10 Lsec⁻1 m⁻² the media may exclude sand.

Another aspect of the invention relates to the filter system. In its broadest sense the filter system comprises two zones; a middle zone (comprising the filter media referred to above) and a lower barrier zone. The filter system may optionally comprise an upper sediment trap, which serves to remove particulate contaminants from the water being treated (as schematically depicted in Fig. 2A). It should be recognised, however, that boundaries between the zones are not necessarily of a definite nature and that at the boundaries between zones there may be a merging of material from one zone into the next. This can easily be understood in the context that the material within each of the zones is generally granular in nature. While in some embodiments of the invention there is a divider inserted between zones, such as a metallic, fabric or plastic mesh with mesh size small enough to exclude the passage of material from either side, in other embodiments of the invention no such divider or mesh is adopted. In these embodiments the granular material from one zone is able, over time, to migrate to some extent into an adjacent zone. Nonetheless, it will be understood that the materials within each zone will predominantly be those as initially introduced into each zone.

The intention of the system overall is that as a result of its constituents it will allow an appropriate rate of water flow there through (for example from 0.5Lsec⁻¹m⁻² to 10Lsec⁻¹m⁻², from 4 - 10 Lsec⁻¹m⁻² (in the case of the high flow embodiment), 0.5 - 3.5 Lsec⁻¹m⁻² (in the case of the low flow embodiment), 2Lsec⁻¹m⁻² to 8Lsec⁻¹m⁻² or from about 3Lsec⁻¹m⁻² to about 6Lsec⁻¹m⁻²') to allow for processing of peak water flow rates that may be experienced during or just after a heavy downpour, but where there is an adequate residence time of the water within the filter media to allow sufficient removal of contaminants. In preferred aspects of the invention the filter media is such as to allow the removal of at least 80%, preferably at least 90% and more preferably at least 95%, 97%, 98% or 99% of all hydrocarbons and at least 60%, preferably at least 80%, more preferably at least 90%, 95%, 96%, 97%, 98% or 99% of heavy metals. Similarly, the filter media preferably removes at least 30% of nitrogen and phosphorous-containing nutrient compounds and preferably at least 45%, more preferably at least 50%, 60%, 70% or 80% of such compounds.

In instances where it is intended for the treated water to be stored, where it is to come into contact with humans or animals and particularly where the water is for human or animal use or consumption it may be appropriate for pathogens to be inactivated or removed. One embodiment of the invention in which pathogen inactivation takes place is in the case where a water soluble salt of chlorine is included within the filter system. Most preferably the chlorine salt will take the form of particles, granules, chunks, cubes etc. of solid material that is slowly released into water flowing through the system. The solid chlorine salt can conveniently be distributed within the upper sediment trap and/or middle zone either as one or more discrete layers or randomly through the sediment trap and/or middle zone. For example, at least 70%, preferably at least 80%, 90% or 95% and most preferably at least 96%, 97%, 98%, 99% or 99.9% of pathogens (or pathogenic indicators in experimental models) are removed or inactivated by the filter system when it includes this feature. Examples of suitable chlorine salts include sodium hypochlorite, chlorinated isocyanurates such as trichloroisocyanuric acid, sodium dichloro-s-triazinetrione (dihydrate or anhydrous), sometimes referred to as "dichlor", and trichloro-s-triazinetrione. Other conventional chlorine salts used for water disinfection can equally be used.

The filter system according to the present invention may be a component of a water harvesting system. That is, a harvesting system that allows for the capture of storm or runoff water (for example on a roof or paved area) and the gross filtration of the water to remove solid or particulate matter such as leaves, twigs, rubbish, stones and pebbles and particulates such as sand or soil components that could clog the media used for finer filtration to remove contaminants. After removal of contaminants the water may then be made directly available for use or may be stored in some form of tank or storage vessel for subsequent use. The mention of such water harvesting systems is, however, made by way of example only as it is equally possible for the filter media and system according to the present invention to be used in other contexts such as in the filtration of piped water or as a component of apparatus or machinery, which may experience improved operation if contaminants can effectively be removed from the water stream. Some examples include pool, pond or fountain filtration systems, high pressure water spray apparatus, vehicle cleaning apparatus, boilers and other industrial machinery. Another aspect of the invention is where the filter media and system according to the present invention is adopted in the context of removal of particulate matter and other contaminants from bodies of stagnant water, such as may form on building sites. In this case the system may be portable and can include appropriate pumping apparatus.

The upper sediment trap, which is effective to remove particulate contaminants from the water being treated, can comprise granular activated carbon, granular zeolite and sand and may optionally include other components such as scoria. In one embodiment the sediment trap comprises discrete layers of GAC, sand and zeolite, and the zeolite can include discrete layers or a mixture of different particle sizes, such as fine (0.5 - 2mm average particle size), medium (1.6 - 2mm average particle size), coarse (2.0 - 4.0 mm average particle size) and very coarse (4.0 to 12mm average particle size), each of which is preferably of filter grade and is for example available from Zeolite Australia Pty Ltd.

As noted above the materials within the upper sediment trap and middle zone (filter media) of the filter system are generally granular in nature. The materials within the sediment trap preferably have average particle size from 0.5mm to 8mm, or in another aspect from 1mm to 6mm or 2mm to 4mm. Similarly in the middle zone the materials will preferably have particle size of from about 0.25mm to about 4mm or 0.25mm to 2mm and preferably about 0.5mm average particle size. For example, zeolite in the filter media can conveniently have average particle size of from about 0.5mm to about 2mm, GAC can have particle size from about 1mm to about 4mm (e.g. 1.68mm to 3.35 as screened through 6x12 size mesh, as available from Activated Carbon Technologies Pty Ltd) and sand can have average particle size of from 0.25mm to about 0.5mm (e.g. 0.25mm to 0.42mm as screened by 30/60 size mesh, and available from Unimin Australia Ltd).

In the lower barrier zone the screening material included therein, which may for example include stones or gravel, crushed rock or river stones, that are preferably washed, will advantageously have average particle size from about 1mm to about 8mm, or in another embodiment from about 2mm to about 6mm, preferably about 4mm. The screening material in the lower zone acts as a barrier to allow water transmission through the system but to substantially contain the other materials included within the filter media. A water permeable mesh (for example of metal, plastic or fabric having appropriate pore size to allow the desired water flow rate) may be provided at a base of the barrier zone to retain the screening material. While the screening material usually does not take an active role in removal of contaminants it is important that the screening material does not include significant levels of water leachable contaminants, which could be transmitted into the water flowing there through.

In another embodiment of the invention the upper sediment trap of the filter system may include granular lime, optionally in conjunction with one or more filler and/or alkaline agents. The term "lime" refers generally to minerals derived generally from limestone or chalk that are composed primarily of the carbonates, oxides and hydroxides of calcium, and in particular of calcium carbonate. In the context of the present invention the lime is provided in a granular form, as discussed above, and the presence of lime in the filter system can assist in the removal and/or inactivation of pathogens. Without wishing to be bound by theory the present inventors understand that the transition in this embodiment of the invention between the alkaline environment of the upper sediment trap to the more pH neutral environment of the middle zone contributes to deactivation of pathogenic agents. The presence of lime in the upper zone also buffers the pH of the water passing into the middle zone to neutral or slightly alkaline pH, which has the effect of preventing leaching of metals from the middle zone. Granular lime of the desired average particle diameter is readily commercially available, for example from garden centres and bulk chemical suppliers.

The middle zone or filter media of the filter system comprises GAC (preferably ACGAC) and granular zeolite and may optionally also include sand. Further optional components such as anthracite, lignite, vermiculite and hydrocarbon removal and antimicrobial agents can also be incorporated into the filter system, particularly within the middle zone.

Granular activated carbon and granular zeolite are high surface area materials that are readily able to adsorb, through either physical or electrostatic forces, contaminants such as hydrocarbons and heavy metals. The term zeolite is intended to encompass hydrated aluminosilicate minerals that have a micro-porous structure. Natural zeolites are formed where volcanic rocks and ash layers react with alkaline ground water. Granular zeolites suitable for use in the present invention can, for example, be sourced from Zeolite Australia Pty Ltd (PO Box 6 Werris Creek NSW 2341, Australia).

Activated carbon, which is also referred to as activated charcoal, is derived from charcoal and volcanic rock and has an exceptionally high surface area for physical and electrostatic adsorption of contaminants such as heavy metals, hydrocarbons and nitrogen and phosphorous containing nutrient compounds. Activated carbon can be activated by treatment with acid, or more likely by exposure to high temperature and pressure, for example in the process of steam activation. GAC can readily be obtained commercially, for example from Activated Carbon Technologies Pty Ltd (PO Box 50 Eltham 3095 Victoria, Australia). Activated carbon can be sourced from a range of organic materials such as timber and is often sourced from waste organic materials such as timber off-cuts and rice, peanut, cashew nut and coconut husks.

The present inventors have determined that the efficiency of the filter media in terms of removal, in particular, of nutrients such as nitrogen and phosphorus containing compounds is significantly improved if the GAC is coated with aluminium to form ACGAC. By this it is meant that aluminium is adsorbed onto the surface of the activated carbon. The inventors have also determined that ACGAC with particularly favourable characteristics in terms of the invention can be produced by exposing granular activated carbon to an aqueous solution comprising one or more aluminium salts which is acidified to a pH of between about 4 and about 6.8, by removing the aqueous solution and washing and drying the aluminium coated granular activated carbon that is produced. The inventors noted that if the pH during the aluminium adsorption or coating process was too low then adsorption of aluminium was less efficient, while if the process was conducted at a pH that was too high then the aluminium tended to precipitate out of solution.

For example, the GAC can be mixed with distilled water that is acidified (for example with hydrochloric acid, nitric acid, citric acid or phosphoric acid) to a pH of from about 4 to about 6.8, preferably from about 5 to about 6.8 and more preferably from about 6 to about 6.5, before the aluminium salt and the mixture is incubated with stirring. For example the aluminium salt may comprise aluminium sulfate, aluminium nitrate, aluminium hydroxide, aluminium chlorohydrate or aluminium chloride. After an incubation period of, for example, between 15 minutes and 24 hours, such as 30 minutes to 6 hours, 45 minutes to 3 hours, or preferably from 1 hour to 2 hours the resulting ACGAC can be removed from the aluminium solution. It is preferably then washed with distilled water and may be dried, for example at about 40°C overnight.

The sand included within the filter system may be from a variety of sources such as mineral sand, beach sand or river sand, although it is preferably washed to ensure the substantial removal of water leachable contaminants. In a preferred aspect of the invention the sand is washed river sand or Unimin specialty sand 30/60, as commercially available from Unimin Australia Limited.

Although it is not essential it is preferred that the components of the middle zone are intimately mixed before they are included within the filter media of the invention. In one embodiment of the invention the ratio (by volume) of granular activated carbon to granular zeolite in the middle zone is between about 0.5:1 and 2:1, such as 0.6:1, 0.8:1, 1:1, 1.4:1 or 1.8:1. The middle zone can further comprise sand and, if present, the sand preferably comprises between about 30% and about 60% of total volume of the middle zone, such as about 37.5%, 40%, 45%, 50%, 55% or 60%.

The present invention also includes within its scope methods of decontaminating water by removal of one or more of particulates, hydrocarbons, heavy metals, nutrients and pathogens which involves exposing the water to a filter system as described herein, preferably wherein the water flows through the filter system at a rate of from about 0.5Lsec⁻¹m⁻² to about 10Lsec⁻¹m⁻². Preferably the flow rate is from about 1Lsec⁻¹m⁻² to about 8Lsec⁻¹m⁻² and most preferably from about 2Lsec⁻¹m⁻² to about 6Lsec⁻¹m⁻².

In one embodiment of the invention the filter media and/or filter system is provided as bulk material that can be installed *in situ* into a water treatment apparatus, while in another form the filter system is provided within a cartridge. Such a cartridge defines a container for the filter system which has a top and base that allow water flow there through. For example, in transport the cartridge may include removable covers for the base and/or for the top to ensure that the filter media is not dislodged in transit. In another embodiment the cartridge may be sealed in plastic film for transport. In one aspect the top of the cartridge comprises a mesh (for example of metal, plastic or fabric) which in use serves as a coarse filter for example of solids, sludge and/or particulates. The mesh can be readily cleaned or replaced if it becomes clogged with particulate matter, solids, sludge or the like.

It is to be understood that the present invention has been described by way of example only and that modifications and/or alterations thereto that would be apparent to persons skilled in the art based upon the disclosures herein are also considered to be encompassed within the spirit and scope of the invention.

The invention will now be further described with reference to the following non-limiting examples.

### EXAMPLES

### Example 1 - Filter media analysis

Eight media were selected for analysis; anthracite, lignite, granular activated carbon, clean river sand, vermiculite, perlite, zeolite and garden compost.

Untreated stormwater was collected at the onset of significant rainfall events as runoff from a modern, impervious, multi-storey car park. Four stormwater solutions were prepared, both filtered (passing a 0.45 µm filter) and unfiltered, and of high and low pollutant loads. Comparisons of efficacy were drawn from results of adsorption tests using a batch equilibrium method. Key pollutants examined included: total nitrogen, total phosphorous, total suspended solids, and heavy metals (Cd, Cr, Cu, Fe, Mn, Ni, Pb, Zn). Of the media tested, those with the greatest adsorptive capacities were: granular activated carbon (G), anthracite (A), vermiculite (V), and zeolite (Z), in decreasing order of effectiveness.

The second stage of this investigation was conducted on eleven combinations of the four media outlined above. A similar methodology as per the first stage was used. As shown in Fig. 1 the most complete pollutant removal combination was found to be equal proportions of granular activated carbon with zeolite (G2Z2). This combination removed 85% of heavy metals tested, and up to 62% of total nitrogen.

### Example 2 - Filter system components

**High flow filter system:** 50mm depth of screenings (i.e. crushed rock), 380mm depth of 50% (all percentages are by volume) GAC 50% zeolite, and then 200mm depth of sediment trap (20mm depth of 50%GAC and 50% zeolite, 45mm depth of zeolite, 45mm depth of medium zeolite, 45mm depth of coarse zeolite and 45mm depth of very coarse zeolite).

**Low flow filter system (no disinfection):** 50mm depth of screenings (i.e. crushed rock), 250mm depth of 25% GAC 25% zeolite, 50% sand, and then 200mm depth of sediment trap (20mm depth of 25% GAC 25% zeolite, 50% sand, 45mm depth of zeolite, 45mm depth of medium zeolite, 45mm depth of coarse zeolite and 45mm depth of very coarse zeolite). This embodiment is depicted schematically in Fig. 2B.

**Low flow filter system (with disinfection):** 50mm depth of screenings (i.e. crushed rock), 250mm depth of 25% GAC 25% zeolite, 50% sand, and then 200mm depth of sediment trap (20mm depth of 25% GAC 25% zeolite, 50% sand, 45mm depth of zeolite, 45mm depth of medium zeolite, 45mm depth of coarse zeolite and 45mm depth of very coarse zeolite). Chlorine cubes are placed in the sediment trap component, within the 60mm depth of zeolite. These cubes are of 30mm sides, and are placed in the sediment trap at a rate of 130/m2.

In another embodiment the GAC in each of the filter systems above is replaced with ACGAC.

### Example 3 - Filter media analysis

The following water analysis results were achieved for synthetic stormwater using the high flow rate filter system from Example 2 (using GAC rather than ACGAC). Synthetic stormwater was prepared by mixing stormwater pond sediment with de-chlorinated tap water, which is topped up with laboratory grade chemicals and microorganisms to meet typical stormwater quality concentrations.

Table 1 shows percentage reduction of TSS = Total Suspended Solids, TP = Total Phosphorous, TN = Total Nitrogen and heavy metals in the treated water. Table 2 shows the percentage reduction of particular microorganisms in the treated water.

**Table 1**

| TSS | TP | TN | Cu | Mn | Ni | Pb | Zn |
|---|---|---|---|---|---|---|---|
| 94% | 35% | 69% | >85% | 80% | >60% | 82% | 90% |

**Table 2**

| *E. coli* | f-RNA phages | *C. perfringens* |
|---|---|---|
| 66.97% | >99.72% | 98.63% |

Preliminary results suggest that TP removal rates will be much higher when using ACGAG in place of GAC. It is also expected that the low flow filter systems will result in higher removal rates than observed for the high flow filters. Preliminary tests with ACGAC in the low flow filter system have shown that phosphorous removal rates increased to around 70% (on average).

When using disinfection in the low flow filter system removal rates for microorganisms increased to >99.99% for *E. coli,* >99.8% for f-RNA phages and 99.92% for *Clostridium perfringens*.

The invention thus concerns a filter media for removal of contaminants from water comprising aluminium coated granular activated carbon and granular zeolite. In said filter media, the ratio (by volume) of aluminium coated granular activated carbon to granular zeolite may be between about 0.5:1 and 2:1. The filter media may further comprising sand. Preferred is a filter media wherein the sand comprises between about 30% and about 60% of total volume of the filter media. The filter media according to claim 3 wherein the sand comprises about 37.5% of total volume of the filter media.

The invention further concerns a method of producing aluminium coated granular activated carbon comprising exposing granular activated carbon to an aqueous solution comprising one or more aluminium salts which is acidified to a pH of between about 5 and about 6.8, removing the aqueous solution and washing and drying the aluminium coated granular activated carbon that is produced. The aqueous solution may be acidified to a pH between about 6 and about 6.5. A preferred aluminium salt is aluminium sulphate.

The invention further concerns a filter system for removal of contaminants from water comprising:
(i) a middle zone comprising granular activated carbon and granular zeolite; and
(iii) a lower barrier zone comprising screening material;
said system allowing a flow rate of water there through of from about 0.5Lsec⁻¹m⁻² to about 10Lsec⁻¹m⁻². In a preferred such filter system, the ratio (by volume) of granular activated carbon to granular zeolite in the middle zone is between about 0.5:1 and 2:1. In a preferred such filter system, the middle zone further comprises sand. In a preferred such filter system, the sand comprises between about 30% and about 60% of total volume of the middle zone. The granular activated carbon preferably comprises aluminium coated granular activated carbon. The filter system may further comprise an upper sediment trap for removing particulate contaminants, notably comprising one or more of scoria, granular activated carbon, granular zeolite and sand. The filter system may further comprise granules of a water soluble chlorine salt, which are preferably provided within the sediment trap and/or the middle zone.

The invention further concerns a cartridge containing a filter system for removal of contaminants from water wherein the cartridge has a top and base that allows water flow there through and wherein the filter system comprises:
(i) a middle zone comprising granular activated carbon and granular zeolite; and
(iii) a lower barrier zone comprising screening material;
wherein said system allows a flow rate of water there through of from about 0.5Lsec⁻¹m⁻² to about 10Lsec⁻¹m⁻². In a preferred such cartridge, a top of the cartridge comprises a mesh which serves as a coarse filter of solids, sludge and/or particulates. The middle zone preferably further comprises sand. The granular activated carbon preferably comprises aluminium coated granular activated carbon. Preferably, the filter system further comprises an upper sediment trap for removing particulate contaminants.

The invention further concerns a method of removing contaminants from water comprising allowing the water to flow through a filter system which comprises:
(i) a middle zone comprising granular activated carbon and granular zeolite; and
(iii) a lower barrier zone comprising screening material;
wherein said water flows through said media at a rate of from about 0.5Lsec⁻¹m⁻² to about 10Lsec⁻¹m⁻². The middle zone preferably further comprises sand. The granular activated carbon preferably comprises aluminium coated granular activated carbon. The filter system preferably further comprises an upper sediment trap for removing particulate contaminants.

## Claims

1. A filter system for removal of contaminants from runoff water comprising:
(i) a middle zone comprising aluminium coated granular activated carbon and granular zeolite; and
(iii) a lower barrier zone comprising screening material;
said system allowing a flow rate of water there through of from about 0.5Lsec⁻¹m⁻² to about 10Lsec⁻¹m⁻²; said filter system effective to remove at least 80% of heavy metals and at least 60% of nitrogen and phosphorus containing nutrient compounds from said runoff water.

2. The filter system according to claim 1 wherein the ratio (by volume) of aluminium coated granular activated carbon to granular zeolite in the middle zone is between about 0.5:1 and 2:1.

3. The filter system according to either claim 1 or claim 2 wherein the middle zone further comprises sand.

4. The filter system according to claim 3 wherein the sand comprises between about 30% and about 60% of total volume of the middle zone.

5. The filter system according to any one of claims 1 to 4 wherein the aluminium coated granular activated carbon is produced by a method comprising exposing granular activated carbon to an aqueous solution comprising one or more aluminium salts which is acidified to a pH of between about 5 and about 6.8.

6. The filter system according to any one of claims 1 to 5 further comprising an upper sediment trap for removing particulate contaminants.

7. The filter system according to claim 6 wherein the sediment trap comprises one or more of scoria, granular activated carbon, granular zeolite and sand.

8. The filter system according to any one of claims 1 to 7 further comprising granules of a water soluble chlorine salt.

9. The filter system according to claim 8 wherein the granules of water soluble chlorine salt are provided within the sediment trap and/or the middle zone.

10. A cartridge containing a filter system for removal of contaminants from runoff water wherein the cartridge has a top and base that allows water flow there through and wherein the filter system comprises:
(i) a middle zone comprising aluminium coated granular activated carbon and granular zeolite; and
(iii) a lower barrier zone comprising screening material;
wherein said system allows a flow rate of water there through of from about 0.5Lsec⁻¹m⁻² to about 10Lsec⁻¹m⁻²; said filter system effective to remove at least 80% of heavy metals and at least 60% of nitrogen and phosphorus containing nutrient compounds from said runoff water.

11. The cartridge according to claim 10 wherein a top of the cartridge comprises a mesh which serves as a coarse filter of solids, sludge and/or particulates.

12. The cartridge according to either claim 10 or claim 11 wherein the middle zone further comprises sand.

13. The cartridge according to any one of claims 10 to 12 wherein the aluminium coated granular activated carbon is produced by a method comprising exposing granular activated carbon to an aqueous solution comprising one or more aluminium salts which is acidified to a pH of between about 5 and about 6.8.

14. The cartridge according to any one of claims 10 to 13 wherein the filter system further comprises an upper sediment trap for removing particulate contaminants.

15. A method of removing contaminants from runoff water comprising allowing the water to flow through a filter system which comprises:
(i) a middle zone comprising aluminium coated granular activated carbon and granular zeolite; and
(iii) a lower barrier zone comprising screening material;
wherein said water flows through said media at a rate of from about 0.5Lsec⁻¹m⁻² to about 10Lsec⁻¹m⁻²; said method effective to remove at least 80% of heavy metals and at least 60% of nitrogen and phosphorus containing nutrient compounds from said runoff water.

16. The method according to claim 15 wherein the middle zone further comprises sand.

17. The method according to either claim 15 or claim 16 wherein the aluminium coated granular activated carbon is produced by a method comprising exposing granular activated carbon to an aqueous solution comprising one or more aluminium salts which is acidified to a pH of between about 5 and about 6.8.

18. The method according to any one of claims 15 to 17 wherein the filter system further comprises an upper sediment trap for removing particulate contaminants.
